(19) **Europäisches Patentamt**

**European Patent Office**

**Office européen des brevets**

(11) Veröffentlichungsnummer : **0 462 312 B1**

(12) **EUROPÄISCHE PATENTSCHRIFT**

(45) Veröffentlichungstag der Patentschrift :
**27.10.93 Patentblatt 93/43**

(21) Anmeldenummer : **90119691.5**

(22) Anmeldetag : **15.10.90**

(51) Int. Cl.⁵ : **F16B 7/04, B21D 53/74**

(54) **Lösbare Steckverbindung für Rahmen.**

(30) Priorität : **16.06.90 DE 4019320**

(43) Veröffentlichungstag der Anmeldung :
**27.12.91 Patentblatt 91/52**

(45) Bekanntmachung des Hinweises auf die
Patenterteilung :
**27.10.93 Patentblatt 93/43**

(84) Benannte Vertragsstaaten :
**AT BE DE DK ES FR IT NL**

(56) Entgegenhaltungen :
**EP-A- 0 161 369**
**DE-A- 2 159 971**
**DE-A- 2 427 242**

(56) Entgegenhaltungen :
**DE-A- 3 208 576**
**GB-A- 1 266 350**
**GB-A- 2 167 489**
**US-A- 3 620 558**

(73) Patentinhaber : **Brunkau, Michael**
**Niddaweg 3**
**W-3500 Kassel (DE)**

(72) Erfinder : **Brunkau, Michael**
**Niddaweg 3**
**W-3500 Kassel (DE)**

(74) Vertreter : **Jahn-Held, Wilhelm W. Dr.Dr.-Ing.**
**Dipl.-Chem.**
**Schöne Aussicht 8**
**D-34355 Staufenberg (DE)**

## Beschreibung

Nach dem Stand der Technik (siehe zum Beispiel die Schrift DE-A- 2 159 971) sind Steckverbindungen an den Ecken nicht direkt verbunden.

Es liegt darin der Nachteil, dass zum Verbinden einer Ecke mindestens drei Teile erforderlich sind und zwar ein äusseres Eckformteil und zwei darin angeordnete Innenteile an dessen Seiten. Es muss dabei das Eckformteil im Material und in seiner Oberfläche auf die verbindenden Rohre abgestimmt sein.

Diese Nachteile werden durch die zwei- oder dreidimensionale, steckbare Verbindungen der Erfindung vermieden. Diese benötigen nur einen Innenkern zur Verbindung von geraden oder eckigen, wie winkligen Rohren.

Gegenstand der Erfindung ist eine zwei- oder dreidimensionale, steckbare Verbindung zum leichten Verbinden oder Lösen von Rahmen.

Es ist die Aufgabe der Erfindung, einfach konstruierte steckbare Verbindungen für leichtes Verbinden und Wiederlösen von Rohren zu schaffen mit für die Praxis sicherer statischer Stabilität unter Vermeidung zusätzlicher Aussenteile.

Die Lösung der Aufgabe der Erfindung ist im kennzeichnenden Teil des Anspruches 1 definiert.

Diese ist dadurch gekennzeichnet, dass der Innenkern zwei oder mehrschalig ist, wobei jede Schale des Innenkernes auf ihrer geraden Oberfläche im Winkel nach innen geneigte, kleinere Flächen, vorzugsweise rechteckige, solcher Flächengrösse aufweist, dass eingeschobene Keile die Winkelflächen der Innenschalen gleichmässig belasten, und die eingeführten Keile durch, in diese über je zwei oder mehrerer Langlöcher des Innenkernes und durch Durchgangslöcher in den Keilen, die auf einer gedachten, geraden Linie minimaler oder maximaler Länge zwischen den beiden Endseiten der Schalen sich befinden, eingeführte Zugschrauben angezogen und dadurch die Schalen gleichmässig an die Innenseite des Aussenrohres fest und kraftschlüssig angedrückt werden, und die Schalen, insbesondere Halbschalen, auf ihrer geraden, oberen Fläche um eine geringe Dicke , vorzugsweise von 1 - 2 mm, in ihrer Höhe erniedrigt sind, und dadurch der Durchmesser des Innenkernes so verkleinert wird, dass dadurch das Aussenrohr zum Aufschieben auf den Innenkern ausreichende Beweglichkeit hat.

Die alternative und bevorzugte Ausgestaltung der zwei- oder dreidimensionalen, steckbaren Verbindung der Erfindung ist in den Unteransprüchen definiert.

Diese sind dadurch gekennzeichnet, dass sie aus Eckverbindungen, oder T- Verbindungen, oder Kreuzverbindungen bestehen.

Diese sind weiter dadurch gekennzeichnet, dass die geneigten, kleineren Flächen einen so grossen Winkel aufweisen, dass die eingeführten Keile beim Auseinanderdrücken der Schalen nicht über die Mitte des Querschnittes der Schalen hinausgehen, und der Winkel nicht so gross ist, dass die Formbeständigkeit des Innenkernes praktisch ausreichend gegeben ist, und dass der Winkel zwischen den geneigten, kleineren Flächen 5° bis 30° , vorzugsweise 8° bis 20° beträgt.

Weiter ist die Erfindung alternativ und bevorzugt dadurch gekennzeichnet, dass die Fläche der Schalen zur geneigten, kleineren Fläche ein Verhältnis von 1 : 1,25 bis 6,00, vorzugsweise von 1 : 1,50 bis 2,50 aufweist.

Ferner ist die Erfindung dadurch alternativ und bevorzugt gekennzeichnet, dass die Keile eine konische Form aufweisen mit einem Durchgangsloch zur Einführung einer Mutter, die sich in einer passgenauen Vertiefung befindet zur Befestigung des Keiles durch die von der Gegenseite durch das Durchgangsloch eingeführten Zugschraube, und dass die Keile zu ihrer Mittelachse in ihrer konischen Ausbildung einen Winkel von 5° bis 30° bilden. Ausserdem ist die Erfindung dadurch alternativ und bevorzugt gekennzeichnet, dass die Zugschrauben in einem Langloch solcher Grösse geführt sind, dass das Justieren der Verbindung zwischen dem Innenkern und dem Aussenrohr ohne eine Verklemmung erfolgt.

Weiter ist die Erfindung dadurch alternativ und bevorzugt gekennzeichnet, dass die Schalen auf der Innenfläche ihrer einen Endseite einen konischen Stift und an ihrer anderen Endseite eine zu diesem passende Vertiefung aufweisen zur Fixierung des mehrschaligen, insbesondere zweischaligen, Innenkernes.

Die Erfindung ist auch dadurch alternativ und bevorzugt gekennzeichnet, dass die Schalen aus thermoplastischem Kunststoff, vorzugsweise aus Polypropylen, in voller oder gerippter Ausführung, mit glatter oder geriffelter Oberfläche bestehen.

Die Erfindung ist auch dadurch alternativ und bevorzugt gekennzeichnet, dass diese folgende Masse aufweist:

| | | |
|---|---|---|
| Aussenrohr, Durchmesser | 59 | mm |
| " , Wandstärke | 2 | " |
| Halbschale, Höhe | 26,5 | " |
| 2 Halbschalen" | 53 | " |
| Zwischenraum: Aussenrohr- | | |
| Halbschalen | 2 | " |
| Halbschale, Länge | 150 | " |
| " , Breite | 53,5 | " |
| " , Fläche | 1.318,8 | $mm^2$ |
| nach innen geneigte, | | |
| kleinere Fläche, Länge | 76 | mm |
| " , Breite | 40 | " |
| ", , Fläche | 608 | $mm^2$ |
| Verhältnis: Fläche der | | |
| Schale: Kleinere Fläche: 1 : 2,17 | | |
| Winkel der nach innen | | |
| geneigten, kleineren Fläche/ | | |
| Winkel des Keiles Grad | 10 | Grad |
| Langloch, Durchmesser | 10 | mm |
| Durchgangsloch, " | 6 | " |
| Zugschraube: Metrische | | |
| Schraube ; Typ M 5 | 50 | " |
| Keil, Länge | 70 | " |
| " , Höhe | 20 | " |
| Beweglichkeit (Längsspiel) | 6 | " |
| Keil, Breite, oben | 15 | " |
| " " , unten | 8 | " |
| Konischer Stift, Vertiefung | | |
| Halbschale, Durchmesser | 5 | " |
| Keil: eingezogene Vertiefung | | |
| für Mutter , M 5, Durchmesser | 8 | " |

Die Die zwei- oder dreidimensionale, steckbare Verbindung der Erfindung ist auch durch ein Verfahren zu seiner Herstellung alternativ und bevorzugt gekennzeichnet. Dieses besteht darin, das die Schalen mit Stift und Vertiefung zusammengesetz werden, danach die Keile eingelegt werden und danach die beiden Aussenrohre so aufgeschoben werden, dass ihre Endflächen auf einer geschlossenen Linie gegeneinander stehen und danach die Zugschrauben in die Langlöcher durch die Rohrwandungen hindurch eingeführt werden und danach weiter in die Keile durch die Durchgangslöcher in die dahinter liegenden und in den Vertiefungen sitzenden Muttern eingeschraubt werden und danach die Endflächen der Aussenrohre justiert werden und die Zugschrauben fest angezogen werden und dadurch die Schalen, vorzugsweise die Halbschalen, gleichmässig auseinander drücken zum festen und kraftschlüssigen Anliegen an der Innenseite des Aussenrohres.

Die Verwendung der zwei- oder dreidimensionalen, steckbaren Verbindung der Erfindung ist auch dadurch gekennzeichnet, dass diese zum Aufbau von Gestängen für auf- und abbaubare Gegenstände für Ausstellungen, wie Messen, oder für Einrichtungsgegenstände, wie für Möbeln, hergestellt werden.

Ein technischer Effekt der steckbaren Verbindung besteht darin, dass ein ausgewähltes Verhältnis der geraden Oberfläche der Halbschalen zu der geneigten, kleineren Fläche besteht.

Sofern dieses einen oberen oder einen unteren Grenzwert überschreitet, ist die Stabilität der Verbindung beeinträchtigt.

Ein weiterer technischer Effekt besteht darin, dass ein kritischer, oberer und unterer Grenzwert des Neigungswinkels der geneigten, kleineren Fläche nicht unter oder überschritten werden darf. Bei einem zu kleinen Neigungswinkel gegen Null wird der eingeschobene Keil zu lang und geht in seiner Länge über die Mitte des Durchmessers des Innenkernes hinaus.

Die steckbare Verbindung der Erfindung stellt auch eine Kombination der Merkmale des Verhältnisses der Oberfläche der Schalen zu den geneigten, kleineren Fläche und der Ausbildung des konischen Keiles in Bezug auf seinen Winkel gegen die geneigte, kleinere Fläche und durch die konstruktive Verbindung dieser Merkmale mit durchgehenden Zugschrauben. Nur durch die Kombination dieser konstruktiven Ausbildung der steckbaren Verbindung gemäss der Erfindung ist die optimale Eignung im auswechselbaren Betrieb der Teile gesichert. Dies gilt ebenso für die notwendige, statische Stabilität der steckbaren Verbindung, insbesondere bei Belastung der verbundenen Teile, wie runde oder eckige Rohre.

Darin liegt der Nachteil, dass die Schalen nicht genügend auseinadergepresst werden.

Bei einem zu grossen Winkel gegen 45° wird der Widerstand des Keiles gegen die geneigte, kleinere Fläche zu gross und die Auflagefläche des Keiles auf der geneigten, kleineren Fläche zu gering.

Es muss dann eine zu grosse Zugkraft für die Zugschraube aufgewendet werden.

Ein weiterer technischer Effekt liegt darin, dass die Höhe der Schalen des Innenkernes erniedrigt sind und dadurch das Aussenrohr leicht aufschiebbar ist und die Justierung der Teile möglich ist und nach dem Anziehen der Zugschrauben die Schalen gleichmässig an die innere Wand des Aussenrohres angedrückt werden. Bei einer Verkleinerung des Durchmessers der aufeinander liegenden Schalen würde dagegen beim Aufspreizen des Keiles kein gleichmässiges Anliegen an der inneren Rohrwand möglich.

Die steckbare Verbindung, insbesondere Eckverbindung, wird durch folgende Figuren erläutert:

Figur

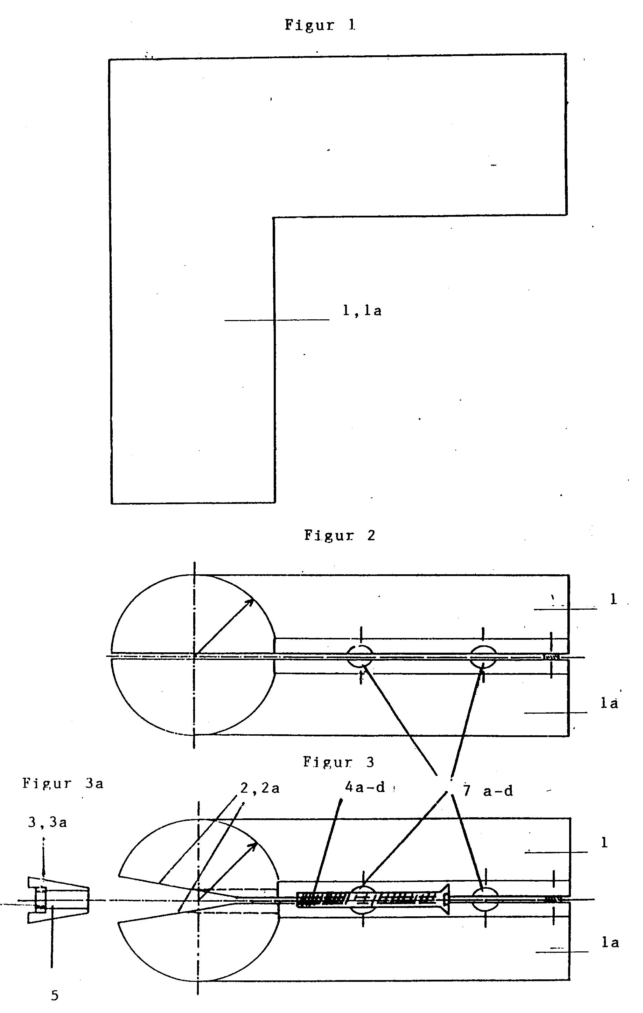

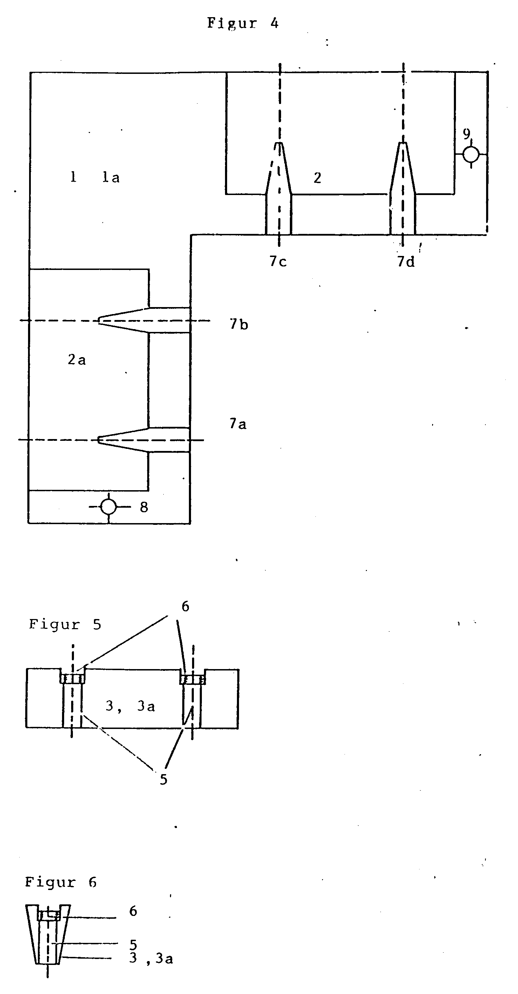

1 Aufsicht auf zwei aufeinanderliegende Halbschalen,
2 Ansicht einer Kopfseite von zwei aufeinanderliegenden Halbschalen.
3 Schnitt durch die Ansicht nach Figur 2,
3a Keil zur Figur 3
4 Aufsicht auf die Planflächen einer Halbschale,
5 Längsschnitt durch einen Keil,
6 Querschnitt durch einen Keil.

Es bedeuten in der Figuren die Ziffern:

1, 1a Schalen
2, 2a nach innen geneigte Flächen
3, 3a eingeschobene Keile
4, a-d Zugschrauben
5 Durchgangslöcher
6 Muttern für Zugeschrauben
7, a-d Langlöcher
8 konischer Stift
9 zum Stift (8) passende Vertiefung

Die zwei- oder dreidimensionale, steckbare Verbindung der Erfindung ist durch ihre konstruktive Ausbildung einfacher und wirtschaftlicher in seiner Herstellung.

Die Verbindung der Erfindung bietet den weiteren Vorteil, dass diese ohne besonderen Aufwand gelöst und bei Bedarf wieder zusammengesetzt werden kann.

Durch ihren konstruktiven Aufbau der Verbindung gemäss der Erfindung führt diese bei der Handhabung in der Praxis stets zu einem engen Verbund durch das gegenseitige Anlegen der Oberflächen des inneren Rohres und der Aussenfläche des Innenkernes.

Die Verbindung der Erfindung bietet den weiteren technischen Vorteil, dass durch das Andrücken der Oberflächen mit dem Keil ( 3,3a) die statische Festigkeit der runden oder eckigen Aussenrohre gegeben ist.

Die Verbindung der Erfindung bietet auch den Vorteil einer raschen und stufenlosen Justierung zur Einstellung eines passgenauen Sitzes der aneinander stossenden Endflächen.

Die Verbindung der Erfindung bietet auch noch den Vorteil, dass diese für den Transport, sowie für den Aufbau oder Abbau der Gegenstände, für welche diese benutzt wird, einfach und rasch zerlegt, gehandhabt

EP 0 462 312 B1

und verpackt werden kann.

**Patentansprüche**

1. Zwei- oder dreidimensionale, steckbare Verbindungen zum leichten Verbinden und Lösen von Rahmen aus runden oder eckigen Aussenrohren mit einem darin eingesteckten Innenkern und mit darin eingesetztem Spreizteil, dadurch gekennzeichnet, dass der Innenkern zwei oder mehrschalig ist, wobei jede Schale (1,a-n) des Innenkernes auf ihrer geraden Oberfläche im Winkel nach innen geneigte, kleinere Flächen (2,a-n), vorzugsweise rechteckige, solcher Flächengrösse aufweist, dass eingeschobene Keile (3,a-n) die Winkelflächen der Innenschalen gleichmässig belasten, und die eingeführten Keile (3,a-n) durch, in diese über je zwei oder mehrerer Langlöcher (7) des Innenkernes und durch Durchgangslöcher (5) in den Keilen (3,a-n),die auf einer gedachten, geraden Linie minimaler oder maximaler Länge zwischen den beiden Endseiten der Schalen (1,a-n) sich befinden, eingeführte Zugschrauben (4) angezogen und dadurch die Schalen (1,a-n) gleichmässig an die Innenseite des Aussenrohres fest und kraftschlüssig angedrückt werden,und die Schalen (1,a-n), insbesondere Halbschalen, auf ihrer geraden, oberen Fläche um eine geringe Dicke , vorzugsweise von 1 - 2 mm, in ihrer Höhe erniedrigt sind, und dadurch der Durchmesser des Innenkernes so verkleinert wird, dass dadurch das Aussenrohr zum Aufschieben auf den Innenkern ausreichende Beweglichkeit hat.

2. Zwei- oder dreidimensionale, steckbare Verbindungen nach Anspruch 1, dadurch gekennzeichnet, dass diese aus Eckverbindungen, oder T- Verbindungen, oder Kreuzverbindungen, bestehen.

3. Zwei- oder dreidimensionale, steckkbare Verbindungen nach den Ansprüchen 1 und 2, dadurch gekennzeichnet, dass die geneigten, kleineren Flächen (2,a-n) einen so grossen Winkel aufweisen, dass die eingeführten Keile (3,a-n) beim Auseinanderdrücken der Schalen (1,a-n) nicht über die Mitte des Querschnittes der Schalen (1,a-n) hinausgehen, und der Winkel nicht so gross ist, dass die Formbeständigkeit des Innenkernes praktisch ausreichend gegeben ist.

4. Zwei- oder dreidimensionale, steckbare Verbindungen nach einem oder mehreren der Ansprüche 1 bis 3, dadurch gekennzeichnet, dass der Winkel zwischen den geneigten, kleineren Flächen 5° bis 30°, vorzugsweise 8° bis 20°, aufweist.

5. Zwei- oder dreidimensionale, steckbare Verbindungen nach einem oder mehreren der Ansprüche 1 bis 4, dadurch gekennzeichnet, dass die Fläche der Schalen (1,a-n) zur geneigten, kleineren Fläche (2,a-n) ein Verhältnis von 1 : 1,25 bis 6,00, vorzugsweise von 1 : 1,50 bis 2,50, aufweist.

6. Zwei- oder dreidimensionale, steckbare Verbindungen nach einem oder mehreren der Ansprüche 1 bis 5, dadurch gekennzeichnet, dass die Keile (3,a-n) eine konische Form aufweisen mit einem Durchgangsloch (5) zur Einführung einer Mutter (6), die sich in einer passgenauen Vertiefung befindet zur Befestigung des Keiles (3,a-n) durch die von der Gegenseite durch das Durchgangsloch (5) eingeführten Zugschraube (4).

7. Zwei- oder dreidimensionale, steckbare Verbindungen nach einem oder mehreren der Ansprüche 1 bis 6, dadurch gekennzeichnet, dass die Keile (3,a-n) zu ihrer Mittelachse in ihrer konischen Ausbildung einen Winkel von 5° bis 30° bilden.

8. Zwei- oder dreidimensionale, steckbare Verbindungen nach einem oder mehreren der Ansprüche 1 bis 7, dadurch gekennzeichnet, dass die Zugschrauben (4,a-n) in einem Langloch (7,a-d) solcher Grösse geführt sind, dass das Justieren der Verbindung zwischen dem Innenkern und dem Aussenrohr ohne eine Verklemmung erfolgt.

9. Zwei- oder dreidimensinale, steckbare Verbindung nach einem oder mehreren der Ansprüche 1 bis 7, dadurch gekennzeichnet, dass die Schalen (1,a-n) auf der Innenfläche ihrer einen Endseite einen konischen Stift (8) und an ihrer anderen Endseite eine zu diesem passende Vertiefung (9) aufweisen zur Fixierung des mehrschaligen Innenkernes.

10. Zwei- oder dreidimensionale, steckbare Verbindung nach einem oder mehreren der Ansprüche 1 bis 9, dadurch gekennzeichnet, dass die Schalen (1,a-n) aus thermoplastischem Kunststoff, vorzugsweise aus Polypropylen,in voller oder gerippter Ausführung, mit glatter oder geriffelter Oberfläche bestehen.

5

11. Zwei- oder dreidimensionale, steckbare Verbindung nach einem oder mehreren der Ansprüche 1 bis 10, dadurch gekennzeichnet, dass diese folgende Masse aufweist:

| | | |
|---|---|---|
| Aussenrohr, Durchmesser | 59 | mm |
| " , Wandstärke | 2 | " |
| Halbschale, Höhe | 26,5 | " |
| 2 Halbschalen" | 53 | " |
| Zwischenraum: Aussenrohr-Halbschalen | 2 | " |
| Halbschale, Länge | 150 | " |
| " , Breite | 53,5 | " |
| " , Fläche | 1.318,8 | $mm^2$ |
| nach innen geneigte, kleinere Fläche, Länge | 76 | mm |
| " ,Breite | 40 | " |
| ", , Fläche | 608 | $mm^2$ |
| Verhältnis: Fläche der Schale: Kleinere Fläche: 1 : 2,17 | | |
| Winkel der nach innen geneigten, kleineren Fläche/ Winkel des Keiles Grad | 10 | Grad |
| Langloch,Durchmesser | 10 | mm |
| Durchgangsloch, " | 6 | " |
| Zugschraube: Metrische Schraube , Typ M 5 | 50 | " |
| Keil, Länge | 70 | " |
| " , Höhe | 20 | " |
| Beweglichkeit (Längsspiel) | 6 | " |
| Keil, Breite, oben | 15 | " |
| " " , unten | 8 | " |
| Konischer Stift, Vertiefung Halbschale, Durchmesser | 5 | " |
| Keil: eingezogene Vertiefung für Mutter , M 5, Durchmesser | 8 | " |

12. Verfahren zur Herstellung der zwei- oder dreidimensionalen, steckbaren Verbindung nach den Ansprüchen 1. bis 11, dadurch gekennzeichnet, dass die Schalen (1,a-n) mit Stift (8) und Vertiefung (9) zusammengesetz werden, danach die Keile (3,a-n) eingelegt werden und danach die beiden Aussenrohre so aufgeschoben werden, dass ihre Endflächen auf einer geschlossenen Linie gegeneinander stehen und danach die Zugschrauben (4,a-n) durch die Löcher der Rohrwandungen und durch die Langlöcher (7,a-n) des Innenkernes hindurch eingeführt werden und danach weiter in die Keile (3,a-n) durch die Durchgangslöcher (5) der Keile geführt und in die dahinter liegenden und in Vertiefungen sitzenden Muttern (6) eingeschraubt werden und danach die Endflächen des Aussenrohres justiert werden, und die Zugschrauben (4,a-n) fest angezogen werden und dadurch die Schalen (1,a-n), vorzugsweise die Halbschalen, gleichmässig auseinander drücken zum festen und kraftschlüssigen Anliegen des Innenkernes an der Innenseite des Aussenrohres.

13. Verwendung der zwei- oder dreidimensionalen, steckbaren Verbindung nach den Ansprüchen 1 bis 12, dadurch gekennzeichnet, dass diese zum Aufbau von Gestängen für auf- und abbaubare Gegenstände für Ausstellungen, wie für Messen, oder für Einrichtungsgegenstände, wie für Möbeln, hergestellt werden.

## Claims

1. Two-dimensional or three-dimensional plug-in connections for readily connecting and disconnecting frames made of round or angled outer tubes with an inner core inserted therein and with an expanding part inserted therein, characterised in that the inner core is dual-shelled or multi-shell, each shell (1,a-n) of the inner core having on its straight surface smaller surfaces (2,a-n) inclined inwards at an angle, preferably rectangular surfaces, of such a surface area that inserted wedges (3,a-n) evenly stress the angle surfaces of the inner shells, and the wedges (3,a-n) which have been introduced are tightened by tension bolts (4) which have been introduced into said wedges by means of two or more elongate holes (7) of the inner core and through through-holes (5) in the wedges (3,a-n), which are located on an imaginary straight line of minimal or maximal length between the two end sides of the shells (1,a-n), and thereby the shells (1,a-n) are pressed evenly, securely and frictionally against the inside of the outer tube, and the shells (1,a-n), in particular half-shells, are reduced in height on their straight upper surface by a small thickness, preferably of 1-2 mm, and thereby the diameter of the inner core is reduced such that the outer tube thereby has sufficient mobility to be pushed on to the inner core.

2. Two-dimensional or three-dimensional plug-in connections according to Claim 1, characterised in that they consist of corner connections, or T-connections, or cross-connections.

3. Two-dimensional or three-dimensional plug-in connections according to Claims 1 and 2, characterised in that the inclined, smaller surfaces (2,a-n) are at an angle which is so large that the wedges (3,a-n) which are introduced when the shells (1,a-n) are pressed apart, do not go beyond the middle of the cross-section of the shells (1,a-n), and the angle is not so large that the dimensional stability of the inner core is practically sufficiently provided.

4. Two-dimensional or three-dimensional plug-in connections according to one or more of Claims 1 to 3, characterised in that the angle between the inclined, smaller surfaces is 5° to 30°, preferably 8° to 20°.

5. Two-dimensional or three-dimensional plug-in connections according to one or more of Claims 1 to 4, characterised in that the ratio of the surface area of the shells (1,a-n) to the inclined, smaller surface area (2,a-n) is 1 : 1.25 to 6.00, preferably 1 : 1.50 to 2.50.

6. Two-dimensional or three-dimensional plug-in connections according to one or more of Claims 1 to 5, characterised in that the wedges (3,a-n) have a conical shape with a through-hole for introducing a nut (6) which is located in a recess of accurate fit for attaching the wedge (3,a-n) by means of the tension bolt (4) which has been introduced through the through-hole (5) from the opposite side.

7. Two-dimensional or three-dimensional plug-in connections according to one or more of Claims 1 to 6, characterised in that the wedges (3,a-n) form an angle of 5° to 30° to their central axis in their conical configuration.

8. Two-dimensional or three-dimensional plug-in connections according to one or more of Claims 1 to 7, characterised in that the tension bolts (4,a-n) are guided in an elongate hole (7,a-d) of such a size that the adjustment of the connection between the inner core and the outer tube takes place without jamming.

9. Two-dimensional or three-dimensional plug-in connection according to one or more of Claims 1 to 7, characterised in that the shells (1,a-n) have a conical pin (8) on the inner surface of one end face and a recess (9) which matches it on their other end face for fixing the multi-shell inner core.

10. Two-dimensional or three-dimensional plug-in connection according to one or more of Claims 1 to 9, characterised in that the shells (1,a-n) are made of thermoplastic material, preferably of polypropylene, in a solid or ribbed form, with a smooth or corrugated surface.

11. Two-dimensional or three-dimensional plug-in connection according to one or more of Claims 1 to 10, characterised in that it has the following measurements:

```
outer tube, diameter                              59       mm
outer tube, wall thickness                         2       mm
half-shell, height                              26.5       mm
2 half-shells, height                             53       mm
gap between outer tube and
       half-shells                                 2       mm
half-shell, length                               150       mm
half-shell, width                               53.5       mm
half-shell, surface area                     1,318.8       mm²
inwardly inclined, smaller
       surface, length                            76       mm
inwardly inclined, smaller
       surface, width                             40       mm


inwardly inclined, smaller
       surface, surface area                     608       mm²
ratio: surface area of the
       shell: smaller surface area       1 : 2.17
angle of the inwardly inclined, smaller
       surface/angle of the wedge             10 degrees
elongate hole, diameter                           10       mm
through-hole, diameter                             6       mm
tension bolt: metric screw, type M 5              50       mm
wedge, length                                     70       mm
wedge, height                                     20       mm
mobility (longitudinal play)                       6       mm
wedge, width, upper                               15       mm
wedge, width, lower                                8       mm
conical pin, recess half-shell, diameter           5       mm
wedge: reduced recess for nut, M 5,
       diameter                                    8       mm
```

12. Process for producing the two-dimensional or three-dimensional plug-in connection according to Claims 1 to 11, characterised in that the shells (1,a-n) with pin (8) and recess (9) are assembled, then the wedges (3,a-n) are placed in and then the two outer tubes are pushed on such that their end faces are against one another on a closed line and then the tension bolts (4,a-n) are introduced through the holes in the tube walls and through the elongate holes (7,a-n) of the inner core and then are guided further into the wedges (3,a-n) through the through-holes (5) of the wedges and are screwed into the nuts (6) which are located behind them and are seated in recesses and then the end faces of the outer tube are adjusted, and the tension bolts (4,a-n) are tightened securely and thereby the shells (1,a-n), preferably the half-shells, press evenly apart so that the inner core bears securely and frictionally on the inside of the outer tube.

13. The use of the two-dimensional or three-dimensional plug-in connection according to Claims 1 to 12, characterised in that it is produced for the construction of bars for items for exhibitions which can be erected and dismantled, such as for trade fairs, or for installation items, such as for furniture.

**Revendications**

1. Assemblages embrochables bi- ou tridimensionnels pour l'assemblage et le démontage commodes de châssis formés de tubes extérieurs ronds ou polygonaux, avec un noyau intérieur inséré dans ceux-ci et avec une pièce extensible insérée dans ceux-ci, caractérisés en ce que le noyau intérieur comporte deux ou plusieurs coquilles, tandis que chaque coquille (1, a-n) du noyau intérieur présente, sur toute sa surface droite, des faces plus petites (2, a-n) à un angle incliné vers l'intérieur et, de préférence, des faces rectangulaires de grandeur telle que les coins insérés (3, a-n) appuient de manière égale sur les faces angulaires des coquilles intérieures et que les coins insérés (3, a-n) soient tirés par des vis de traction (4) introduites dans deux ou plusieurs trous longitudinaux (7) du noyau intérieur et dans des trous de passage (5) dans les coins (3, a-n) qui se trouvent sur une ligne droite imaginaire de longueur minimale ou maximale entre les deux faces terminales des coquilles (1, a-n), en ce que les coquilles (1, a-n) sont pressées uniformément et fortement, en formant un assemblage rigide, contre la face intérieure du tube extérieur et que les coquilles (1, a-n), et en particulier les demi-coquilles, présentent sur toute leur face supérieure droite une diminution de leur hauteur sur une faible épaisseur qui est, par exemple, de 1 à 2 mm, et en ce que le diamètre du noyau intérieur est réduit de façon que le tube extérieur ait une mobilité suffisante pour venir coulisser sur le noyau intérieur.

2. Assemblages embrochables bi- ou tridimensionnels selon la revendication 1, caractérisés en ce que ceux-ci sont constitués d'assemblages angulaires ou d'assemblages en T ou d'assemblages en croix.

3. Assemblages embrochables bi- ou tridimensionnels selon les revendications 1 et 2, caractérisés en ce que les petites faces inclinées (2, a-n) présentent un angle suffisamment grand pour que les coins insérés (3, a-n) ne dépassent pas le milieu de la section des coquilles (1, a-n) lorsqu'on écarte les unes des autres les coquilles (1, a-n) et que cet angle n'est pas trop grand, de façon que l'indéformabilité du noyau intérieur soit réalisée de manière pratiquement suffisante.

4. Assemblages embrochables bi- ou tridimensionnels selon une ou plusieurs des revendications 1 à 3, caractérisés en ce que l'angle entre les petites faces inclinées est compris entre 5° et 30°, et de préférence entre 8° et 20°.

5. Assemblages embrochables bi- ou tridimensionnels selon une ou plusieurs des revendications 1 à 4, caractérisés en ce que les faces des coquilles (1, a-n) présentent, par rapport aux petites faces inclinées (2, a-n), un rapport de 1:1,25 à 6,0 et, de préférence, de 1:1,50 à 2,50.

6. Assemblages embrochables bi- ou tridimensionnels selon une ou plusieurs des revendications 1 à 5, caractérisés en ce que les coins (3, a-n) ont une forme conique avec un trou de passage (5) pour l'introduction d'un écrou (6) qui se trouve dans un renfoncement dimensionné exactement en vue de la fixation du coin (3, a-n) par la vis de traction (4) introduite à travers le trou de passage (5) depuis le côté opposé.

7. Assemblages embrochables bi- ou tridimensionnels selon une ou plusieurs des revendications 1 à 6, caractérisés en ce que les coins (3, a-n) forment un angle de 5° à 30° avec leur axe central lorsqu'ils présentent une forme conique.

8. Assemblages embrochables bi- ou tridimensionnels selon une ou plusieurs des revendications 1 à 7, caractérisés en ce que les vis de traction (4, a-n) sont introduites dans un trou longitudinal (7, a-d) de dimensions telles que l'ajustage de l'assemblage entre le noyau intérieur et le tube extérieur soit réalisé sans serrage.

9. Assemblage embrochable bi- ou tridimensionnel selon une ou plusieurs des revendications 1 à 7, caractérisé en ce que les coquilles (1, a-n) présentent, sur la face intérieure de leur côté terminal, une broche conique (8) et, à leur autre côté terminal, un renfoncement (9) adapté à celle-ci en vue de la fixation du noyau intérieur à plusieurs coquilles.

10. Assemblage embrochable bi- ou tridimensionnel selon une ou plusieurs des revendications 1 à 9, caractérisé en ce que les coquilles (1, a-n) sont constituées d'une matière thermoplastique et, de préférence, de polypropylène en exécution massive ou nervurée, avec une surface lisse ou striée.

11. Assemblage embrochable bi- ou tridimensionnel selon une ou plusieurs des revendications 1 à 10, caractérisé en ce que celui-ci présente les dimensions suivantes :

```
Tube extérieur, diamètre                    59  mm
Tube extérieur, épaisseur de paroi           2  mm
Demi-coquille, hauteur                     26,5  mm
2 demi-coquilles, hauteur                    53  mm
Interstice : tubes extérieurs                2  mm
Demi-coquille, longueur                     150  mm
Demi-coquille, largeur                     53,5  mm
```

| | |
|---|---|
| Demi-coquille, surface | 1.318,8 mm² |
| Petite face inclinée vers l'intérieur, longueur | 76 mm |
| Petite face inclinée vers l'intérieur, largeur | 40 mm |
| Petite face inclinée vers l'intérieur, surface | 608 mm² |

Rapport : surface de la coquille :

petite face : 1:2,17

(angle des petites faces inclinées

vers l'intérieur)

| | |
|---|---|
| Angle du coin, degrés | 10 degrés |
| Trou longitudinal, diamètre | 10 mm |
| Trou de passage, diamètre | 6 mm |
| Vis de traction : vis métrique, type M 5 | 50 mm |
| Coin, longueur | 70 mm |
| Coin, hauteur | 20 mm |
| Mobilité (jeu longitudinal) | 6 mm |
| Coin, largeur, supérieur | 15 mm |
| Coin, largeur, inférieur | 8 mm |
| Broche conique, renfoncement demi-coquille, diamètre | 5 mm |
| Coin : renfoncement pratiqué pour écrou, M 5, diamètre | 8 mm |

12. Procédé de fabrication de l'assemblage embrochable bi- ou tridimensionnel selon les revendications 1 à 11, caractérisé en ce que les coquilles (1, a-n) sont assemblées par la broche (8) et le renfoncement (9) après que les coins (3, a-n) ont été insérés et que, ensuite, les deux tubes extérieurs sont placés de façon que leurs faces terminales se trouvent vis-à-vis sur une ligne fermée et que les vis de traction (4, a-n) sont ensuite introduites à travers les trous des parois de tubes et à travers les trous longitudinaux (7, a-n) du noyau intérieur et qu'elles sont ensuite introduites plus loin dans les coins (3, a-n) par les trous de passage (5) des coins et qu'elles sont vissées dans les écrous (6) se trouvant derrière ceux-ci et reposant dans des renfoncements et que, ensuite, les faces terminales du tube extérieur sont ajustées et que les vis de traction (4, a-n) sont fortement serrées et que, de ce fait, les coquilles (1, a-n) et, de préférence, les demi-coquilles sont écartées uniformément les unes des autres pour venir appuyer fortement en réalisant un assemblage résistant contre le noyau intérieur sur la face intérieure du tube extérieur.

13. Utilisation de l'assemblage embrochable bi- ou tridimensionnel selon les revendications 1 à 12, caractérisé en ce que celui-ci est utilisé pour le montage de tringles pour objets à monter et à démonter, pour des expositions ainsi que pour des foires ou pour des objets d'aménagement, ainsi que pour des meubles.

Figur 1

Figur 2

Figur 3

Figur 3a

Figur 3

2,2a    4a-d    7 a-d

3,3a

6

5

1,1a

1

1a

1

1a

Figur 4

Figur 5

Figur 6